**Europäisches Patentamt**

**European Patent Office**

**Office européen des brevets**

(11) Veröffentlichungsnummer : **0 149 203**
**B1**

(12) **EUROPÄISCHE PATENTSCHRIFT**

(45) Veröffentlichungstag der Patentschrift :
15.03.89

(51) Int. Cl.⁴ : **F 24 F 13/065**

(21) Anmeldenummer : **84116025.2**

(22) Anmeldetag : **21.12.84**

(54) Ausströmdüsenanordnung für Injektor-Raumklimageräte.

(30) Priorität : 07.01.84 DE 3400393
21.08.84 DE 3430720

(43) Veröffentlichungstag der Anmeldung :
24.07.85 Patentblatt 85/30

(45) Bekanntmachung des Hinweises auf die Patenterteilung : 15.03.89 Patentblatt 89/11

(84) Benannte Vertragsstaaten :
AT BE CH DE FR GB LI LU NL SE

(56) Entgegenhaltungen :
DE--A-- 3 242 215

(73) Patentinhaber : **Bernhardt, Henryk**
**Luisenstrasse 10**
**D-5014 Kerpen 3 (DE)**

**Bernhardt, Georg**
**Lindemannstrasse 62**
**D-4000 Düsseldorf 1 (DE)**

**Bernhardt, Adam**
**Heyermanshove 3**
**NL-2726 AM Zoetermeer (NL)**

(72) Erfinder : **Bernhardt, Henryk**
**Luisenstrasse 10**
**D-5014 Kerpen 3 (DE)**
Erfinder : **Bernhardt, Adam**
**Heyermanshove 3**
**NL-2726 AM Zoetermeer (NL)**

(74) Vertreter : **Fischer, Friedrich B., Dr.-Ing.**
**Saarstrasse 71**
**D-5000 Köln 50 (DE)**

## Beschreibung

Die Erfindung bezieht sich auf eine Ausströmdüsenanordnung für Injektor-Raumklimageräte, insbesondere zum gerichteten Ausblasen größerer Luftmengen in Hallen o. dgl.

Die Hochdruckklimatisierung durch Injektor-Raumklimageräte beruht auf dem Prinzip der Induktion. Beim Einblasen von Primärluft wird die 4- bis 6-fache Menge an Sekundärluft als Lüftungs-, Kühlungs-, Befeuchtungs-, Beheizungs-, Trocknungsund sonstige Klimatisierungsluft in Bewegung gesetzt, so daß die zur Verfügung stehende gesamte bewegte Luftmenge etwa den 5-7-fachen Betrag der eingeblasenen Primärluftmenge hat.

In diesem Zusammenhang ist in DE-A-32 42 215 ein InjektorRaumklimagerät beschrieben, bei dem eine oder mehrere Düsen am Außenumfang Rillen oder sonstige Aussparungen aufweisen, in die die Stirnfläche eines Düsenkopfes eingreifen kann, wobei die Düse elastisch verformbar ist.

Die Düsen sind zylindrisch ausgebildet, und diejenige Rille, die zur Düsenachse senkrecht ist, hat Kreisform. Die übrigen Rillen haben dagegen Ellipsenform, und die Länge ihrer großen Achsen weicht von der Länge der kleinen Achsen um so mehr ab, je größer der Winkel der Rillenebene gegenüber der zur Düsenachse senkrechten Ebene ist. Hierdurch entstehen Probleme der Abdichtung der Düsen gegenüber der Düsenplatte, und auch die Montage der Düse ist erheblich erschwert.

Die Erfindung bezweckt, eine Ausströmdüsenanordnung für Injektor-Raumklimageräte zu schaffen, die den jeweiligen Raum-, Klima- und Strömungsverhältnissen noch einfacher und wirksamer angepaßt werden kann.

Zu diesem Zweck besitzen die Ausströmdüsen der Düsenanordnung an ihren Außenflächen angeordnete Nuten oder Erhebungen, die eine Schar von Kreisen gleicher Radien bilden, die einen Punkt gemeinsam haben oder sich an einer Seite stark einannähern und deren Ebenen Winkel miteinander einschließen.

Hinsichtlich weiterer bevorzugter Ausführungsformen der Erfindung wird auf die Ansprüche Bezug genommen.

Ausführungsbeispiele der Erfindung werden nachfolgend anhand der Zeichnungen näher erläutert.

Fig. 1 zeigt perspektivisch eine bevorzugte Ausführungsform einer Ausströmdüse der Düsenanordnung gemäß der Erfindung.

Fig. 2-4 zeigen im Längsschnitt bevorzugte Ausführungsformen von Ausströmdüsen der Düsenanordnung gemäß der Erfindung, wobei der Gegenstand der Fig. 2 im wesentlichen dem der Fig. 1 entspricht.

Fig. 5 zeigt schematisch eine Möglichkeit der Montage einer Ausströmdüse der Düsenanordnung gemäß der Erfindung.

Fig. 6 zeigt die Anordnung von drei Ausströmdüsen der Düsenanordnung in einem Düsenkopf im Längsschnitt.

Fig. 7 und 8 zeigen in Draufsicht und im Schnitt Ausströmdüsen der Düsenanordnung in rechteckigen Druckkammern.

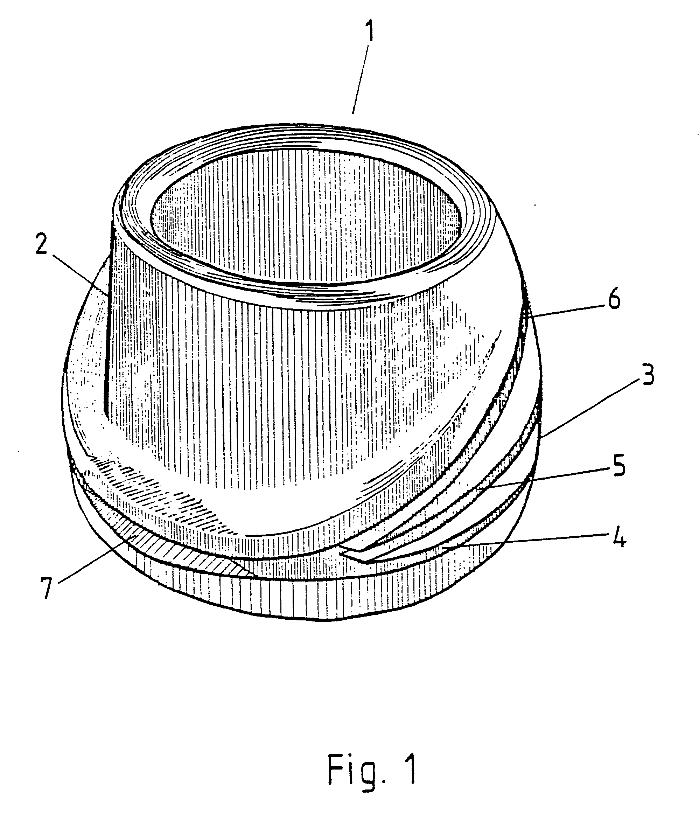

Der in Fig. 1 dargestellte Düsenkörper 1 kann in einen (oberen) Düsenteil 2 und einen (unteren) Halteteil 3 aufgeteilt werden. Der Düsenteil 2 ist so bemessen und ausgebildet, daß er bei geringstmöglichem Materialaufwand und möglichst geringer Steifigkeit gegenüber einem seitlichen Kraftangriff noch die Funktion der vorgesehenen Führung komprimierter Luft in eine bestimmte Richtung erfüllen kann. Dieser Teil kann daher vorzugsweise zylindrisch oder konisch derart ausgestaltet sein, daß die Außenfläche zur Innenfläche im wesentlichen parallel ist.

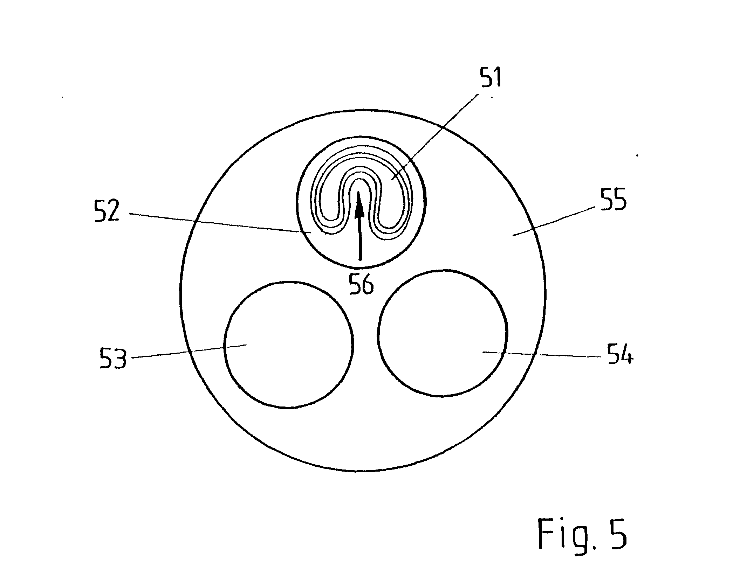

Der Halteteil 3 ist demgegenüber als Kugel- oder Ellipsoidoberfläche derart ausgebildet, daß er eine form- oder reibungsschlüssige Verbindung mit der Stirnplatte 55 (Fig. 5) ermöglicht. Dies bedingt naturgemäß in diesem Bereich einen etwas größeren Materialaufwand.

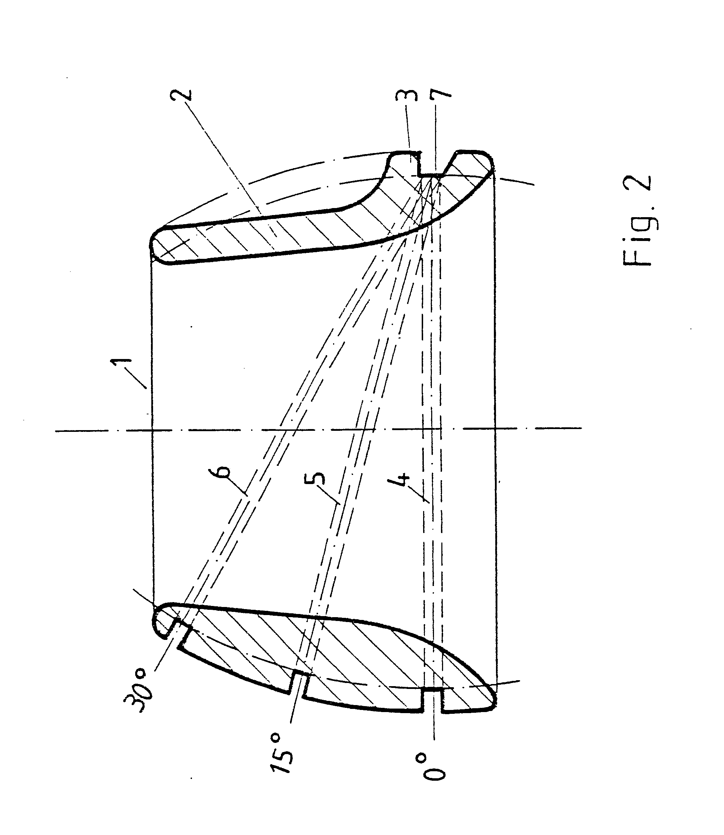

Wie aus den Figuren 1 und 2 hervorgeht, befinden sich an der Außenseite des Düsenkörpers 1 im Bereich des Halteteils 3 drei Nuten 4, 5 und 6 oder sonstige geeignete Aussparungen oder Ansätze, deren Ebenen Winkel miteinander bilden, und in die die Stirnplatte 55 (Fig. 5) ganz oder teilweise derart eingreifen kann, daß bei Wechsel des Eingriffs in eine andere Nut o. dgl. eine Änderung der Ausströmrichtung erfolgt. Dabei haben die Nuten o. dgl. 4, 5 und 6 auf einer Seite des Düsenkörpers minimale Abstände voneinander, so daß sie sich an der Stelle 7 (Ruhepunkt) miteinander vereinigen, während sie auf einer anderen Seite, vorzugsweise der gegenüberliegenden Seite, maximale Abstände voneinander haben. Wie Fig. 2 zeigt, schließen die durch die Nuten beschriebenen Ebenen jeweils Winkel von 15° gegeneinander ein.

Der Düsenkörper 1 ist so gestaltet, daß er auf der Seite der Stelle 7 (Ruhepunkt), in der die Nuten 4, 5 und 6 zusammenlaufen — und hier greift auch die Stirnplatte 55 (Fig. 5) in allen drei Stellungen ein — eine Kugel- oder Ellipsoidoberfläche hat, während er auf dieser Seite anschließend entsprechend der Düsenfunktion in eine zylindrische oder konische Form mit geringerer Wandstärke und dementsprechend geringerer Steifigkeit gegenüber seitlichem Kraftangriff übergeht.

Auch ist in den Figuren 1 und 2 erkennbar, daß diejenige Nut 6, die gegenüber der zur Stirnplatte senkrechten Abströmrichtung die stärkste Ablenkung des ausgeworfenen Luftstrahls bewirkt, im Grenzbereich des als Kugel- oder Ellipsoidoberfläche ausgebildeten Teils des Düsenkörpers angeordnet ist und der dem Grenzbereich in Strömungsrichtung folgende Teil in eine zylindrische oder konische Form übergeht.

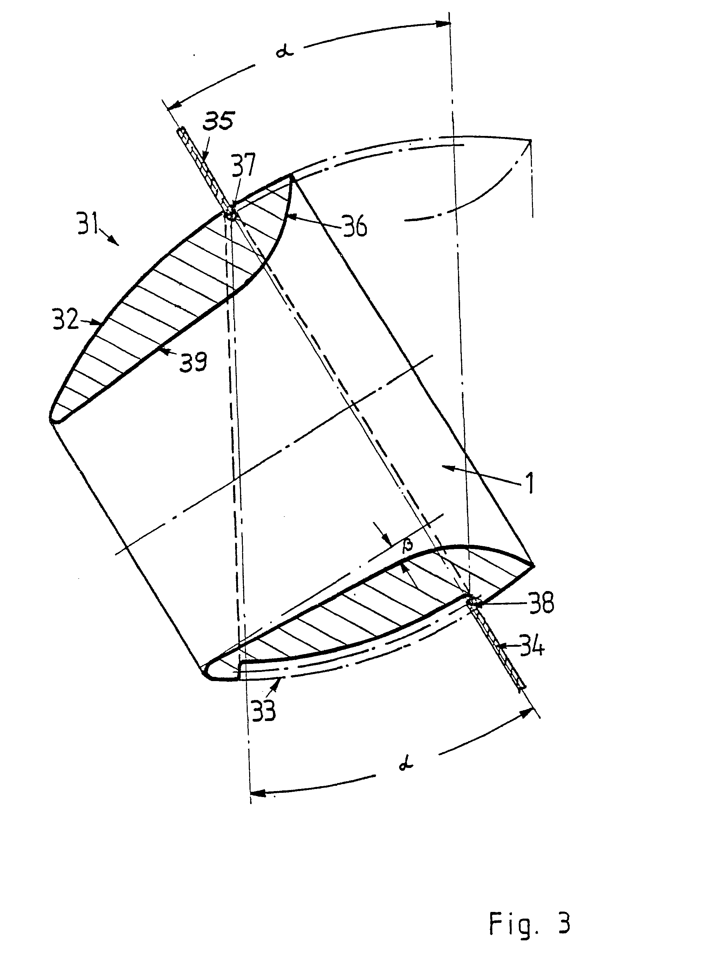

Der in Fig. 3 dargestellte Längsschnitt zeigt einen Düsenkörper 31 der Düsenanordnung gemäß der Erfindung, dessen Außenseite 32 als Teil einer Kugel- oder Ellipsoidoberfläche ausgebildet und in einer (nicht dargestellten) als Teil einer Kugel- oder Ellipsoidinnenfläche ausgebildeten Halterung schwenkbar bzw. gleitbar angeordnet ist. Der Düsenkörper 31 ist in der Halterung derart bewegbar, daß er bei einer Änderung seiner Ausströmrichtung an einem Punkt, dem Ruhepunkt 37, keine Lageveränderung erfährt, während der ihm diametral gegenüberliegende Punkt 35 eine maximale Ortsveränderung ausführt.

Ein dem Ruhepunkt 37 des Düsenkörpers 31 gegenüberliegender Meridian ist als mit Weichstoff oder einem sonstigen geeigneten Material ausgekleidete Nut 33 ausgebildet, in die ein Fortsatz 34 der Halterung eingreift. In entsprechender Weise kann im Ruhepunkt 37 eine Aussparung ausgebildet sein, in die ein Ansatz 35 der Halterung eingreift. Form und Material der Auskleidung der Nut 33 sind ebenso wie Form und Material des Fortsatzes 34 so gewählt, daß optimale Reibungsverhältnisse bestehen, also einerseits eine Einstellbewegung des Düsenkörpers in alle Stellungen innerhalb eines vorgegebenen Winkels $\alpha$ ohne übermäßigen Kraftaufwand möglich ist, und andererseits eine einmal eingestellte Lage betriebsmäßig unverändert beibehalten bleibt.

Es ist nicht in allen Fällen erforderlich, daß die Nut 33 mit einem zusätzlichen Material ausgekleidet ist. Wenn z. B. der Düsenkörper 31 aus einem Material besteht, das selbst die erforderlichen Reibungseigenschaften hat, z. B. aus Weichkunststoff, so erübrigt sich eine Auskleidung. Auch braucht die Fixierung der Stellung des Düsenkörpers 31 in seiner Halterung nicht unbedingt reibungsschlüssig zu erfolgen ; so ist es z. B. möglich, in der Nut 33 mehrere in Richtung der Nut hintereinanderliegende etwa halbkugelförmige Aussparungen anzuordnen, in die der Fortsatz 34 federnd eingreift.

Es kann auch vorteilhaft sein, die Einstellbarkeit in eine bestimmte Richtung dadurch zu erreichen, daß ein dem Ruhepunkt 37 des Düsenkörpers 31 gegenüberliegender Meridian des Düsenkörpers einen Fortsatz (nicht dargestellt) aufweist, der in eine mit Weichstoff oder sonstigem Material geeigneter Beschaffenheit ausgekleidete Meridiannut der Kugelinnenfläche der Halterung eingreift.

Wie Fig. 3 zeigt, ist es strömungstechnisch vorteilhaft, den Düsenkörper 31 der Düsenanordnung so auszubilden, daß er auf der Einströmseite einen verhältnismäßig weiten (maximalen) Durchmesser hat, der zunächst entlang einer Kreisbogenkontur 36 abnimmt. Der Radius des Kreisbogens ist vorzugsweise gleich dem Radius der Öffnung des Düsenkörpers 31 auf der Abströmseite. An die Kreisbogenkontur 36 schließt sich eine Zone 39 mit einer im wesentlichen geraden Erzeugenden an. Dabei ist es vorteilhaft, daß die Erzeugende mit der Symmetrieachse bzw. mit einer zu ihr parallelen Linie einen Winkel $\beta$ einschließt, so daß sich der Querschnitt der Öffnung des Düsenkörpers 31 in Richtung auf die Ausströmöffnung kontinuierlich verringert. Der Winkel $\beta$ liegt vorzugsweise zwischen 4° und 6°.

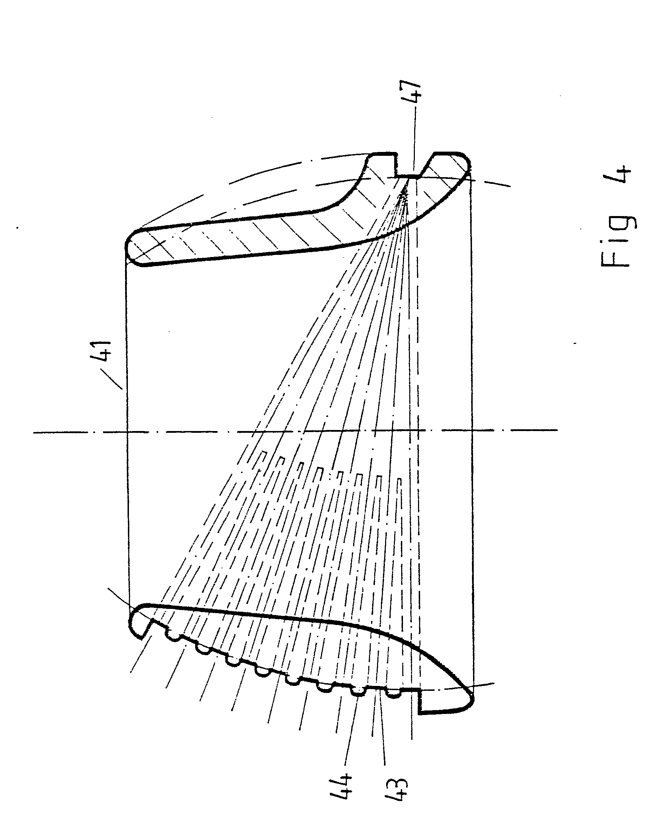

Fig. 4 zeigt eine weitere bevorzugte Ausführungsform eines Düsenkörpers 41 der Düsenanordnung gemäß der Erfindung, die eine besonders genaue Verstellbarkeit der Ausströmrichtung in kleinen Winkelabständen ermöglicht. Wenn an der dem Ruhepunkt 47 gegenüberliegenden Seite die Nuten 43 und die Erhebungen 44 in Längsrichtung Abmessungen von etwa 3 mm haben, liegen zwischen den einzelnen Nuten etwa je 3 Winkelgrade. Bei größeren Anordnungen können die Abstände größer sein, z. B. 5 mm, während sie bei kleineren Anordnungen entsprechend geringere Abmessungen haben können.

Fig. 5 zeigt eine Draufsicht auf die Stirnplatte 55 einer Düsenanordnung. In der Stirnplatte 55 befinden sich drei kreisförmige Aussparungen 52, 53 und 54, in die je ein Düsenkörper eingesetzt werden soll.

Zu diesem Zweck wird ein Düsenkörper 51 durch seitlichen manuellen Kraftangriff in Richtung des Pfeiles 56 vorzugsweise senkrecht zur Abströmrichtung bzw. zu seiner Symmetrieachse derart U-förmig verformt, daß sein Außendurchmesser gegenüber der ursprünglichen Form signifikant reduziert ist. In der Draufsicht nimmt der Düsenkörper dann eine U- bzw. eine nierenförmige Gestalt an, so daß er in die für ihn bestimmte Aussparung 52 eingesetzt werden kann. Bei Nachlassen des Kraftangriffs erfolgt eine vollständige elastische Rückverformung des Düsenkörpers 51, so daß dieser nun form- bzw. reibungsschlüssig in seiner Halterung, im vorliegenden Fall der Stirnplatte 55, arretiert ist. Es hat sich gezeigt, daß die in den Figuren 1, 2 und 4 dargestellte Form besonders günstige Eigenschaften dadurch hat, daß Düsenkörper mit verhältnismäßig großem Durchmesser durch manuellen Kraftangriff ohne besondere Schwierigkeiten eingesetzt, umgesetzt, ausgetauscht oder entfernt werden können.

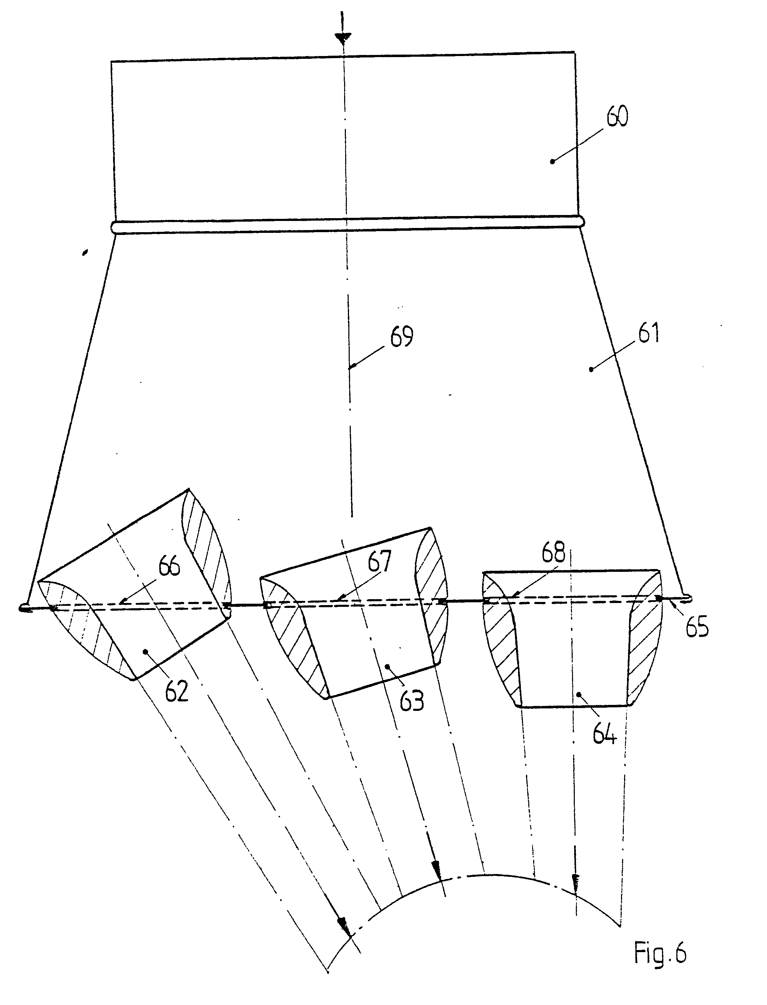

Die in die Nuten eingreifenden Fortsätze können die Abdeckungen der Vorderseite von Düsenköpfen sein. Eine bevorzugte Ausführungsform dieser Art zeigt Fig. 6. Die Druckluft gelangt von einem Anschlußstutzen 60 zu einem Düsenkopf 61, dessen vorzugsweise konischer Innenraum sich zur Abströmseite erweitert und dort mit einer Stirnplatte 65 abgeschlossen ist. In der Stirnplatte 65 sind Ausströmdüsen 62, 63 und 64 angeordnet. Jede der Ausströmdüsen 62, 63 und 64 besitzt wenigstens eine Umfangsnut 66 bzw. 67 bzw. bzw. 68, und zwar im vorliegenden Fall derart, daß der Düsenkörper der Ausströmdüse 62 gegenüber der Symmetrielinie 69 bzw. einer zu ihr parallelen Linie einen Winkel von 30° einschließt. Dieser Winkel beträgt bei Ausströmdüse 63 15°, während er bei Ausströmdüse 64 0° beträgt. Man erhält auf diese Weise einen kompakten, geschlossenen Luftstrom, der große Wurfweiten ermöglicht. Statt der genannten Winkel können auch andere geeignete Winkelabmessungen vorgesehen werden.

Die in Fig. 6 dargestellte Düsenanordnung ermöglicht eine Vereinfachung dadurch, daß bei geringeren Anforderungen an die Flexibilität der Anpassung der Düsenanordnung an geänderte Betriebsbedingungen jede der Düsen nur eine einzige Umfangsnut zu besitzen braucht. Erforderliche Anpassungen werden dann durch Austausch oder Umsetzen von Düsen vorgenommen.

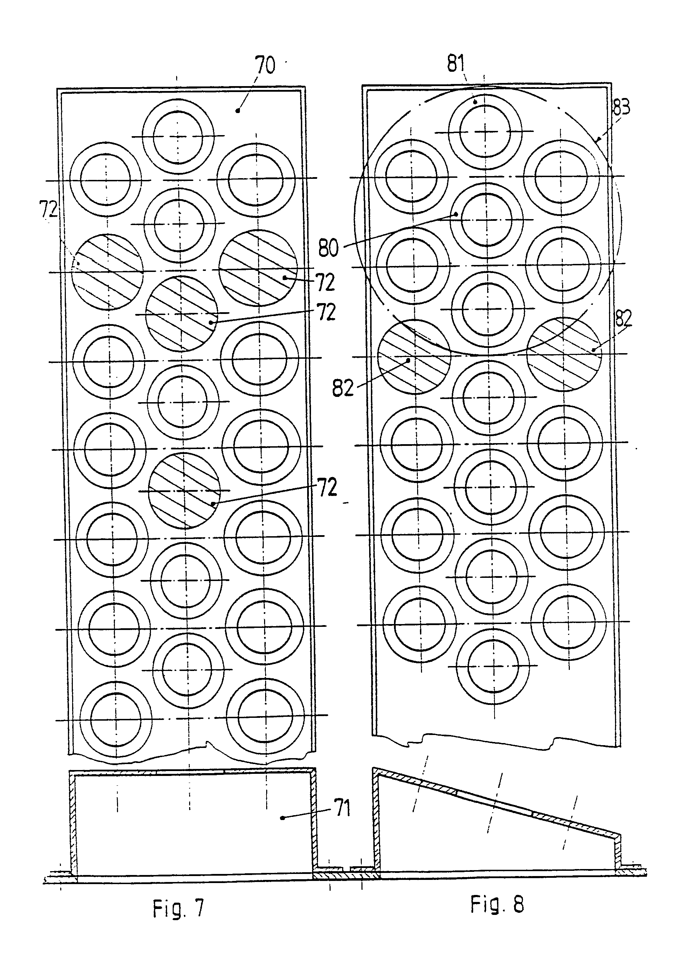

Fig. 7 zeigt eine Düsenanordnung in Draufsicht und im Querschnitt, bei der die Druckkammer im wesentlichen quaderförmig ausgebildet ist.

Die Düsen sind in einer Wandung 70 der Druckkammer 71 ausgebildet, und sie sind in drei parallelen Reihen gegeneinander versetzt angeordnet. Dabei sind vier Düsen 72 als Blinddüsen ausgebildet, also geschlossen.

Die in Fig. 8 dargestellte Düsenanordnung ist nicht quader-, sondern pultförmig ausgebildet, so daß der ausgeworfene Luftstrahl schräg verläuft. In der dargestellten Anordnung sind zwei symmetrische Blinddüsen 82 eingesetzt, und die über ihnen befindlichen sieben Düsen sind kreissymmetrisch angeordnet, mit einer zentralen Düse 80 und äußeren Düsen 81, wie durch die strichpunktierte Linie 83 angedeutet ist. Die von der strichpunktierten Linie 83 umschlossenen Düsen können von Fall zu Fall andere Werte der Geschwindigkeit der ausströmenden Luft haben als die übrigen Düsen.

Es ist nicht unbedingt erforderlich, daß die Außenflächen der Ausströmdüsen der Düsenanordnung als Teil einer Kugel- oder Ellipsoidoberfläche ausgebildet sind. Sie können Teil einer beliebigen geeigneten Rotationsfläche sein oder Teile enthalten, die durch Rotation einer Kurve entstanden sind. Das gleiche gilt auch für die Innenflächen der Ausströmdüsen.

Die Erfindung ermöglicht, daß in vorteilhafter Weise Düsenanordnungen geschaffen sind, welche gestatten, auch Räume großer Abmessungen in wirtschaftlicher Weise derart zu beheizen, zu belüften bzw. zu klimatisieren, daß es für in dem Raum befindliche Personen subjektiv angenehm ist. Dies wird erreicht durch die hohe Flexibilität der Anpassung an den jeweiligen Anwendungsfall, wie sie in dieser Wirksamkeit bisher noch nicht erreicht wurde.

**Patentansprüche**

1. Ausströmdüsenanordnung für Injektor-Raumklimageräte mit mehreren Düsenkörpern, die in ihrer Halterung schwenkbar gelagert sind, insbesondere zum gerichteten Ausblasen größerer Luftmengen in Heizungs-, Lüftungs-, Klimatisierungs-, Kühlungs-, Trocknungs- und Befeuchtungsanlagen, dadurch gekennzeichnet, daß der Düsenkörper an seiner Außenfläche angeordnete Nuten oder Erhebungen aufweist, die auf einer Schar von Kreisen oder Teilkreisen gleicher Radien liegen, die einen Punkt gemeinsam haben oder sich an einer Seite stark einander nähern und deren Ebenen Winkel miteinander einschließen.

2. Ausströmdüsenanordnung nach Anspruch 1, dadurch gekennzeichnet, daß die Düsenkörper derart schwenkbar in ihrer Halterung angeordnet sind, daß sie bei Änderung der Ausströmrichtung an einem Punkt (Ruhepunkt) im wesentlichen die gleiche Lage gegenüber einer Halterung beibehalten, während der Punkt auf der gegenüberliegenden Seite eine maximale Ortsveränderung relativ zu der Halterung ausführt.

3. Ausströmdüsenanordnung nach Anspruch 1 oder 2, dadurch gekennzeichnet, daß die Außenflächen von Düsenkörpern vollständig oder teilweise als Kugel- oder Ellipsoidoberflächen ausgebildet und in ihrer vollständig oder teilweise als Kugel- bzw. Ellipsoidinnenfläche ausgebildeten Halterung schwenkbar angeordnet sind.

4. Ausströmdüsenanordnung nach einem der Ansprüche 1-3, dadurch gekennzeichnet, daß ein Teil der Außenflächen von Düsenkörpern oder der Halterungen als Kugel- oder Ellipsoidflächen ausgebildet ist, an der ein Ansatz der Halterung bzw. eines Düsenkörpers führend und fixierend angreift.

5. Ausströmdüsenanordnung nach einem der Ansprüche 1-4, dadurch gekennzeichnet, daß die Düsenkörper von Ausströmdusen nur jeweils eine kreis- oder teilkreisförmige Nut gleichen Durchmessers aufweisen, deren Ebenen gegenüber der Achse der Düsenkörper gleiche oder verschiedene Winkel bilden.

6. Ausströmdüsenanordnung nach einem der Ansprüche 1-5, dadurch gekennzeichnet, daß kreisförmige Nuten auf demjenigen Teil der Außenfläche von Düsenkörpern, auf dem sie maximale Abstände voneinander haben, im Längsschnitt etwa die gleiche Breite wie die zwischen ihnen angeordneten Erhebungen besitzen.

7. Ausströmdüsenanordnung nach einem der Ansprüche 1-6, dadurch gekennzeichnet, daß ein Teil der Außenflächen von Düsenkörpern als Kugel- oder Ellipsoidoberflächen derart ausgebildet ist, daß er eine form- oder reibungsschlüssige Verbindung mit einer Halterung oder Stirnplatte ermöglicht, während der übrige Teil der Düsenkörper, insbesondere der in Richtung zur Ausströmöffnung liegende Teil, zylindrisch oder konisch derart ausgebildet ist, daß die Außenfläche zur Innenfläche im wesentlichen parallel ist.

8. Ausströmdüsenanordnung nach Anspruch 7, dadurch gekennzeichnet, daß diejenige Nut bzw. Erhebung der Düsenkörper, die gegenüber der zur Halterung oder Stirnplatte senkrechten Ausströmrichtung die stärkste Ablenkung des ausgeworfenen Luftstrahls bewirkt, im Grenzbereich der als Kugeloder Ellipsoioberfläche ausgebildeten Teile der Düsenkörper angeordnet ist und der dem Grenzbereich in Strömungsrichtung folgende Teil der Düsenkörper in eine zylindrische oder konische Form übergeht.

9. Ausströmdüsenanordnung nach einem der Ansprüche 1-8, dadurch gekennzeichnet, daß Düsenkörper in dem Bereich des Eingriffs der Halterung oder der Stirnplatte derart elastisch ausgebildet sind, daß sie bei seitlichem Kraftangriff U-förmig eindrückbar sind und eine Querschnittsreduzierung erfahren, derart, daß sie in die Halterung oder die Stirnplatte eingesetzt oder aus ihr gelöst werden können.

## Claims

1. A delivery nozzle system for injector room conditioners comprising a number of nozzle members pivotably mounted in a holder, more particularly for directional ejection for large amounts of air in heating, ventilation, air-conditioning, cooling, drying and moistening plants, characterised in that the nozzle members have grooves or raised portions on their outer surface lying on a family of circles or part-circles of equal radius and having a common point or closely approaching one another on one side and in planes at an angle to one another.

2. A nozzle system according to claim 1, characterised in that the nozzle members are pivotably disposed in their mounting so that when the outflow direction changes they retain practically the same position relative to a holder at one point (the inoperative point) whereas the point on the opposite side experiences a maximum change of position relative to the holder.

3. A nozzle system according to claim 1 or 2, characterised in that the outer surfaces of nozzle members are completely or partly in the form of spherical or ellipsoidal surfaces and are pivotably mounted in the holder, which is completely or partly in the form of a spherical or ellipsoidal inner surface.

4. A nozzle system according to any of claims 1 to 3, characterised in that part of the outer surfaces of the nozzle members or holders is in the form of spherical ellipsoidal surfaces at which a projection of the holder or a nozzle member engages in guiding and fixing manner.

5. A nozzle system according to any of claims 1 to 4, characterised in that the nozzle members of the delivery nozzles each have only one circular or partcircular groove of equal diameter, the planes of the grooves being at the same or different angles to the nozzle-member axis.

6. A nozzle system according to any of claims 1 to 5, characterised in that circular grooves on that part of the outer surface of nozzle members at which they are at the maximum distances apart, have approximately the same width in longitudinal section as the raised portions between them.

7. A nozzle system according to any of claims 1 to 6, characterised in that part of the outer surfaces of nozzle members is in the form of spherical or ellipsoidal surfaces so as to form a positive or frictional connection with a holder or end plate, whereas the remaining part of the nozzle members, more particularly the part in the direction towards the discharge opening, is cylindrical or conical so that the outer surface is substantially parallel to the inner surface.

8. A nozzle system according to claim 7, characterised in that the groove or raised portion of the nozzle members which most strongly deflects the ejected air jet relative to the delivery direction at right angles to the holder or end plate, is disposed in the boundary region of the parts of the nozzle members in the form of a spherical or ellipsoidal surface, and the part of the nozzle members following the boundary region in the flow direction merges into a cylindrical or conical shape.

9. A nozzle system according to any of claims 1 to 8, characterised in that nozzle members in the place of engagement of the holder or end plate are resiliently constructed so that when acted upon by a lateral force they can be pressed into a U shape and experience a reduction in cross-section so that they can be inserted into or released from the holder or end plate.

## Revendications

1. Dispositif à tuyères d'éjection pour les appareils de climatisation des locaux à injecteurs comprenant plusieurs corps de tuyère qui sont montés pivotants dans leur support, en particulier pour le soufflage dirigé de quantités d'air très importantes dans des installations de chauffage, d'aération, de climatisation, de refroidissement, de séchage et, d'humidification, caractérisé par le fait que le corps de tuyère présente des rainures ou des saillies disposées sur sa surface extérieure et situées sur un système de cercles ou de portions de cercles de même rayon qui ont un point en commun ou qui s'approchent fortement l'un de l'autre sur un côté, et dont les plans forment des angles entre eux.

2. Dispositif à tuyères d'éjection selon la revendication 1, caractérisé par le fait que les corps de tuyère sont montés pivotants dans leur support de telle façon que, lors d'une modification de la direction d'éjection, ils conservent pour l'essentiel la même position par rapport à un support en un point (point mort), cependant que le point situé sur le côté opposé subit une modification de position maximale par rapport au support.

3. Dispositif à tuyères d'éjection selon la revendication 1 ou 2, caractérisé par le fait que les surfaces extérieures des corps de tuyère sont réalisées totalement ou partiellement sous la forme de surfaces sphériques ou ellipsoïdales, et qu'elles sont montées pivotantes dans leur support qui est réalisé totalement ou partiellement sous la forme d'une surface intérieure sphérique ou ellipsoïdale.

4. Dispositif à tuyères d'éjection selon l'une des revendications 1-3, caractérisé par le fait qu'une partie de la surface extérieure des corps de tuyère ou des supports est réalisée sous la forme de surfaces sphériques ou ellipsoïdales sur lesquelles un prolongement du support ou, respectivement, d'un corps de tuyère est en prise pour les guider et les fixer.

5. Dispositif à tuyères d'éjection selon l'une des revendications 1-4, caractérisé par le fait que les corps de tuyère des tuyères d'éjection ne présentent chacun qu'une rainure en forme de cercle ou de portion de cercle de même diamètre dont les plans forment des angles égaux ou différents par rapport à l'axe des corps de tuyère.

6. Dispositif à tuyères d'éjection selon l'une des revendications 1-5, caractérisé par le fait que les rainures circulaires, sur la partie de la surface extérieure des corps de tuyère où elles présentent entre elles des distances maximales, présentent en coupe longitudinale sensiblement la même largeur que les saillies qui sont disposées entre elles.

7. Dispositif à tuyères d'éjection selon l'une des revendications 1-6, caractérisé par le fait qu'une partie des surfaces extérieures des corps de tuyère est réalisée sous la forme de surfaces sphériques ou ellipsoïdales, de façon à rendre possible une liaison par conjugaison de formes ou par frottement avec un support ou une plaque frontale, cependant que la partie restante des corps de tuyère, et en particulier la partie située dans la direction de l'ouverture d'éjection, est réalisée de manière conique ou cylindrique de telle façon que la surface extérieure soit sensiblement parallèle à la surface intérieure.

8. Dispositif à tuyères d'éjection selon la revendication 7, caractérisé par le fait que celle des rainures ou des saillies des corps de tuyère qui produit la déviation maximale du jet d'air éjecté par rapport à la direction d'éjection perpendiculaire au support ou à la plaque frontale, est disposée dans la zone limite des parties des corps de tuyère qui sont réalisées sous la forme de surfaces sphériques ou ellipsoïdales, et que la partie des corps de tuyère qui suit la zone limite dans la direction de l'écoulement se change en une forme cylindrique ou conique.

9. Dispositif à tuyères d'éjection selon l'une des revendications 1-8, caractérisé par le fait que les corps de tuyère sont réalisés élastiquement dans la région où ils sont en prise avec le support ou la plaque frontale, de telle sorte qu'ils puissent être écrasés en forme de U et subir une réduction de section par application d'une force latérale pour qu'ils puissent être insérés dans le support ou dans la plaque frontale ou en être enlevés.

Fig. 1

Fig. 2

Fig. 3

Fig 4

Fig. 5

Fig.6

Fig. 7

Fig. 8